# EUROPEAN PATENT APPLICATION

(11) **EP 4 787 119 A1**
(43) Date of publication of application: **05.08.2026**
(21) Application number: 26153389.7
(22) Date of filing: 22.01.2026
(51) Int. Cl.: G06F 1/26

(54) **COMPUTING DEVICE COMPONENT BATTERY CHARGING**

(30) Priority: 31.01.2025 US 202519043057
(71) Applicant: Microsoft Technology Licensing, LLC, Redmond, WA 98052 (US)
(72) Inventor: NIELSEN, Gregory Allen, Redmond, Washington, 98052 (US); KIM, Donghwi, Redmond, Washington, 98052 (US)
(74) Representative: CMS Cameron McKenna Nabarro Olswang LLP

(57) **Abstract**

A mobile computing device (10) is configured to charge a component battery (14, 32, 52). The mobile computing device (10) comprises a power supply unit (20), a computing device battery (12), a processor (18, 504), and a memory (15, 508, 512) storing instructions (16) executable by the processor (18, 504) to control a rate of charging the component battery (14, 32, 52) from either the power supply unit (20) or the computing device battery (12) based at least in part on a magnitude of throttled power provided to the processor (18, 504).

## Description

### BACKGROUND

Some electronic devices, such as laptop and tablet computers, can be used with one or more rechargeable external components, such as a stylus or keyboard. Additionally or alternatively, some devices can include an auxiliary battery in addition to a primary battery. In some examples an electronic device can charge the battery of the external component and/or an auxiliary battery of the device.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

As described in more detail below, computing devices and methods are configured to charge a component battery. In some examples, the computing device comprises a mobile computing device comprising a power supply unit, a computing device battery, a processor, and a memory storing instructions executable by the processor to control a rate of charging the component battery from either the power supply unit or the computing device battery based at least in part on a magnitude of throttled power provided to the processor.

As described in more detail below, configurations of the present disclosure utilize the magnitude of throttled power provided to the computing device processor to control the charging of the component battery. Advantageously, the described configurations control this component battery charging in a manner that ensures the performance of the computing device processor is not undesirably impacted. Additionally, in some examples the state of charge of the component battery is utilized to switch from the power supply unit or computing device battery to a renewable energy source to charge the component battery in a manner that enables better computing device performance and/or maintains acceptable performance of the component.

### BRIEF DESCRIPTION OF THE DRAWINGS

FIG. 1 depicts an example mobile computing device and detachable electronic pen and keyboard according to examples of the present disclosure.
FIG. 2 shows a schematic representation of components of the computing device, electronic pen, and keyboard according to examples of the present disclosure.
FIG. 3 shows a flow chart of one example of controlling a rate of charging a component battery when mobile computing device is utilizing power supplied from the power supply unit.
FIG. 4 shows a flow chart of one example of controlling a rate of charging a component battery when mobile computing device is utilizing power supplied from the computing device battery.
FIGS. 5A and 5B illustrate an example method of controlling a rate of charging a component battery according to examples of the present disclosure.
FIG. 6 is a block diagram of an example computing system according to examples of the present disclosure.

### DETAILED DESCRIPTION

Some mobile computing devices can be used with one or more detachable components, such as an electronic pen or keyboard. In some examples a mobile computing device can charge the battery of a detachable component through a physical connection or via wireless power transfer. Additionally or alternatively, some computing devices can include an auxiliary battery in addition to its primary battery. In some examples the computing device can charge an auxiliary battery of the device from either a power supply unit or the primary computing device battery. In some examples, such charging of a detachable component or an auxiliary battery can negatively impact the performance of the computing device.

Accordingly, the present disclosure describes mobile computing devices and methods for controlling the rate of charging a component battery, such as a battery of a detachable component or an auxiliary battery of the computing device. As described further below, these mobile computing devices and methods manage such component battery charging in a manner that preserves or improves performance levels of the mobile computing devices. In some aspects, a rate of component battery charging can be controlled based on its impact on computing device processor(s) operation, including a depth of power throttling applied to the processor(s). Additionally and in some examples, component battery charging can be controlled by monitoring the state of charge of the component battery and switching from a computing device power source to a renewable energy source when the state of charge is above a renewable source threshold, advantageously enabling greater allocation of computing device power resources to the computing device processor(s) and/or maintaining acceptable performance of the component.

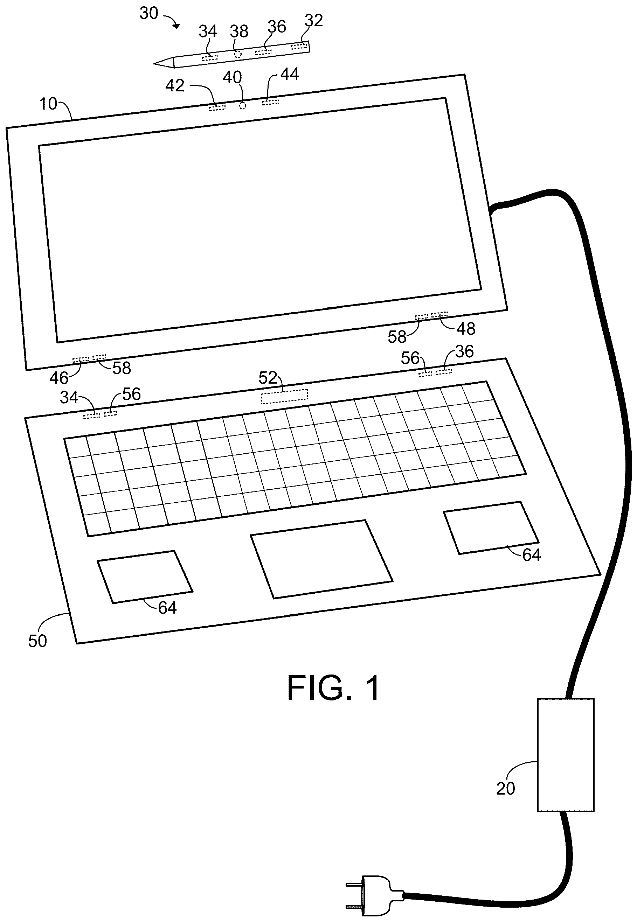

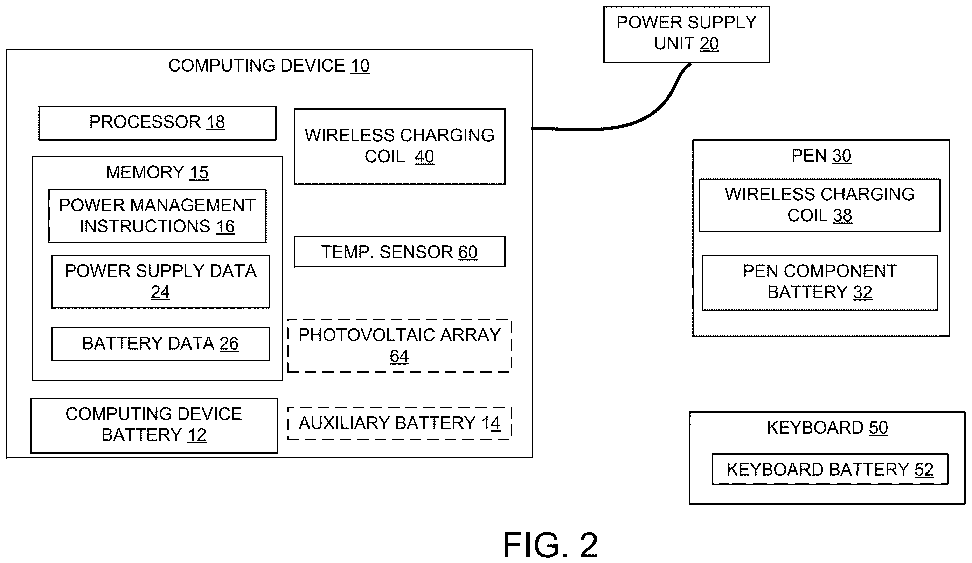

FIG. 1 illustrates an example mobile computing device 10 in the form a tablet computer that includes aspects of the present disclosure. FIG. 1 also illustrates detachable components in the form of an electronic pen 30 and keyboard 50. In other examples a variety of other mobile computing devices and detachable components can be utilized with the present disclosure. With reference also to FIG. 2, mobile computing device 10 further includes a primary computing device battery 12 that can provide operating power to the mobile computing device. In some examples of the present disclosure, mobile computing device 10 can include a component battery in the form of an auxiliary battery 14 that can be utilized to provide supplemental battery power to the device, such as to extend available time in standby mode. The auxiliary battery 14 has a capacity lower than the primary computing device battery 12. In some non-limiting examples, auxiliary battery 14 has a capacity between approximately 25% and 55% of the capacity of the computing device battery 12. In these examples and as described further below, auxiliary battery 14 can be charged via the mobile computing device 10. In other examples of the present disclosure, mobile computing device 10 does not include an auxiliary battery.

As described further below, computing device 10 includes a memory 15 storing power management instructions 16 that are executable by processor 18 to control a rate of charging a component battery of a detachable component of the computing device, such as the electronic pen 30 and/or keyboard 50, and/or an auxiliary battery of the computing device, based at least in part on a magnitude of throttled power provided to the processor. Additionally and as described further below, power management instructions 16 can utilize additional data and parameters to manage component battery charging and other power-related features of mobile computing device 10. Such data can include power supply data 24 (current, voltage, power, etc.) and battery data 26 (current, voltage, power, relative state of charge, etc.).

In the present example, mobile computing device 10 includes a power supply unit 20 to provide operating power to the computing device, charge a computing device battery 12 which can also provide operating power, and/or charge a component battery as described further below. The electronic pen 30 includes a pen component battery 32 that can be charged via computing device 10. In the present example and with reference to FIG. 1, electronic pen 30 includes a first pen magnet 34 and a second pen magnet 36 spaced from the first pen device magnet along the body of the pen. In this example the first pen magnet 34 and the second pen magnet 36 are both located inside and beneath the exterior surface of the pen such that they are not visible to a user.

In this example electronic pen 30 further includes a pen wireless charging coil 38 configured to receive and provide power to pen component battery 32 in the pen. The pen wireless charging coil 38 is located inside and beneath the exterior surface of the pen such that it is not visible to a user. A current can be induced in the pen wireless charging coil 38 by placing the coil near a corresponding charging coil. In the example of FIG. 1, mobile computing device 10 includes a computing device wireless charging coil 40 configured to induce current in the pen wireless charging coil 38 when the pen 30 is removably magnetically attached and positioned in a charging orientation on the computing device. When pen 30 is in the charging orientation and removably attached to the two computing device magnets 42, 44, the pen wireless charging coil 38 is aligned with and positioned close to the computing device wireless charging coil 40 to enable efficient wireless charging of the input device.

In other examples, other near field wireless energy transfer protocols can be utilized to charge pen component battery 32. In other examples, pen component battery 32 can be charged via electrical contact between electrodes in the electronic pen and computing device or via a wired connection.

In a similar manner, keyboard 50 includes a keyboard component battery 52 that can be charged via computing device 10. With reference again to FIG. 1, in the present example keyboard 50 includes a first keyboard magnet 34 and a second keyboard magnet 36 spaced from the first keyboard device magnet along the body of the keyboard to enable the keyboard to be magnetically attached and detached from mobile computing device 10 via corresponding computing device magnets 46 and 48. In this example keyboard 50 further includes electrical contacts 56 to receive and provide power to keyboard component battery 52 in the keyboard. In the example of FIG. 1, mobile computing device 10 includes device electrical contacts 58 configured to contact and transfer power to keyboard electrical contacts 56 when keyboard 50 is removably magnetically attached and electrically coupled to the computing device.

As noted above, in some examples charging a component battery from a host computing device can negatively impact the performance of the computing device. For example, when a mobile computing device is utilizing an underpowered power supply unit to provide operating power and component device charging power, to prevent the system from discharging the computing device battery, the power provided to the mobile device processor may be significantly throttled to a depth that causes substandard processor performance. In other examples, a mobile computing device is not connected to external power and is utilizing its computing device battery to provide operating power and component device charging power. In these examples, where excessive loading on the computing device battery is experienced, to reduce the battery discharge rate to an acceptable level, the power provided to the mobile device processor also may be significantly reduced to a magnitude that causes substandard processor performance.

Accordingly, to address the above and other drawbacks, the present disclosure describes mobile computing devices and methods for controlling a rate of charging a component battery, such as a battery of a detachable component or a computing device auxiliary battery, that are based at least in part on a magnitude of throttled power provided to the processor.

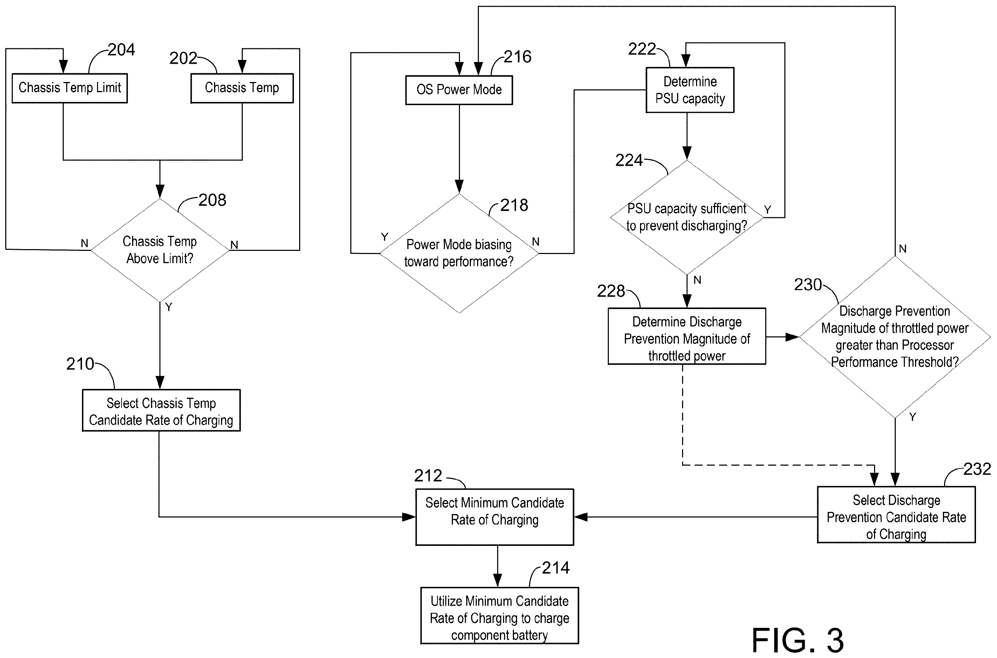

In one example and with reference now to FIG. 3, a use case example of controlling a rate of charging a component battery when the mobile computing device 10 is utilizing power supplied from the power supply unit 20 is provided. In this example and as described further below, a plurality of candidate rates of charging the component battery are determined, and a minimum candidate rate of charging from the plurality of candidate rates of charging is selected for charging the component battery. For descriptive purposes only, the pen component battery 32 of electronic pen 30 will be described in this example. In other examples, instead of or in addition to electronic pen 30, auxiliary battery 14, keyboard 50, and/or other configurations of detachable components can be utilized.

In this example, at 202 a chassis temperature of the mobile computing device 10 is determined, such as via a temperature sensor 60 in the computing device. Where the chassis temperature is above a chassis temperature limit, determined or retrieved at 204, it may be desirable to reduce a rate of charging the pen component battery 32 of electronic pen 30 to correspondingly reduce the heat generated by the battery charging. Accordingly, at 208 when power management instructions 16 determine that the chassis temperature is above the chassis temperature limit, at 210 the chassis temperature is utilized to select a chassis temperature candidate rate of charging the component battery.

In some examples, a single predetermined chassis temperature candidate rate of charging the component battery is selected when the chassis temperature is above the chassis temperature limit. In other examples, a chassis temperature candidate rate of charging the component battery may be selected from a plurality of chassis temperature candidate rates of charging that correspond to different magnitudes of chassis temperatures, such as in a lookup table. As described further below, at 212 the selected chassis temperature candidate rate of charging the component battery is compared to one or more other candidate rates of charging and a minimum candidate rate of charging is selected. At 214 the minimum candidate rate of charging is then utilized to charge the pen component battery 32.

In this example where mobile computing device 10 is utilizing power supplied from the power supply unit 20, an operating system power mode and capacity of the power supply unit 20 of the computing device are also utilized to control the rate of charging the pen component battery 32. In some computing devices, multiple user-selectable power modes that prioritize device performance, power efficiency, or a balance of performance and efficiency are available. With continued reference to FIG. 3, at 216 the power management instructions 16 determine the current power mode utilized by the mobile computing device 10. At 218 it is determined if the power mode is biasing operation of the mobile computing device 10 toward higher performance. For example, a "best performance" power mode setting biases operation of the device toward higher performance, such as higher processor speeds requiring higher power usage, whereas a "best efficiency" power mode setting biases operation of the device toward power efficiency (and reduced performance). In other examples, power management instructions 16 do not analyze the current power mode and proceed to determine the capacity of the power supply unit 20 as described further below.

If the power mode is biasing operation of the mobile computing device 10 toward higher performance, the system returns to monitor the selected power mode. Where the current power mode is not biasing operation of the mobile computing device 10 toward higher performance, the power management instructions 16 proceed to determine if a capacity of the power supply unit 20 meets or exceeds a capacity threshold. As noted above, in some examples a mobile computing device utilizes an underpowered power supply unit to provide operating power and component device charging power. In these examples, to prevent the system from discharging the computing device battery, the power provided to the mobile device processor may be significantly throttled to a depth that causes substandard and/or unacceptable processor performance.

Accordingly, at 222 the power management instructions 16 can determine or retrieve from memory the capacity of the power supply unit 20. At 224, and in one potential advantage of the present disclosure, the power management instructions 16 determine if the capacity of the power supply unit 20 is sufficient to allow throttling of the mobile device processor to enable charging the pen component battery 32 while also preventing discharging of the computing device battery. Advantageously, by determining if the power supply unit capacity is sufficient to allow throttling of the mobile device processor, configurations of the present disclosure avoid excessive throttling of the processor caused by underpowered power supply units. In some examples, power management instructions 16 can determine whether a capacity of the power supply unit 20 meets or exceeds a capacity threshold.

In the present example, where it is determined that the capacity of the power supply unit 20 meets or exceeds the capacity threshold, reductions in the rate of charging the pen component battery 32 are unnecessary. Where it is determined at 224 that the capacity of the power supply unit 20 is below the capacity threshold, power management instructions 16 proceed to determine a magnitude of throttled power for the device processor 18. More particularly and at 228, power management instructions 16 determine a discharge prevention magnitude of throttled power that will prevent discharging of the computing device battery 12 while the mobile computing device 10 is receiving external power via the power supply unit 20.

In some examples, determining a discharge prevention magnitude of throttled power can include utilizing a feedback control loop to monitor the discharge rate of the computing device battery 12, and adjusting the discharge prevention magnitude of throttled power to the processor until the discharge rate is zero. In other examples, any other suitable methods for determining the discharge prevention magnitude of throttled power can be utilized.

In other examples, other data and inputs in addition to or instead of power supply unit capacity can be evaluated to determine whether to throttle power to the processor 18 to prevent discharging of the computing device battery 12. Examples of other inputs include, but are not limited to, the relative state of charge (RSOC) of the computing device battery 12, predictions that a user will disconnect the mobile computing device 10 from external power after an estimated length of time, and a user-selected setting that disables battery discharge prevention via processor throttling.

With a discharge prevention magnitude of throttled power determined, in some examples at 230 power management instructions 16 can compare the discharge prevention magnitude of throttled power to a processor performance threshold magnitude of power. In different examples the processor performance threshold magnitude of power can be selected to represent a minimum magnitude of power that enables processor 18 to provide an acceptable quality of performance. Where the discharge prevention magnitude of throttled power is less than a processor performance threshold magnitude of power, the system can return to monitoring the operating system power mode. In this manner, and in another potential advantage of the present disclosure, by determining that the discharge prevention magnitude of throttled power to the processor is less than a processor performance threshold magnitude of power, configurations of the present disclosure prevent throttling of the processor operation by an undesirably large amount that would cause unacceptable processor performance.

Where the discharge prevention magnitude of throttled power meets or exceeds the processor performance threshold magnitude of power, at 232 power management instructions 16 select a discharge prevention candidate rate of charging the pen component battery 32 from a plurality of candidate rates of charging to charge the pen component battery. In some examples, a discharge prevention candidate rate of charging the pen component battery may be selected from a plurality of candidate prevention candidate rates of charging that correspond to different magnitudes of discharge prevention throttled power, such as in a lookup table. In other examples, after determining the discharge prevention magnitude of throttled power at 228, power management instructions 16 proceed directly to 232 to select a discharge prevention candidate rate of charging the pen component battery 32.

At 212, power management instructions 16 compare the discharge prevention candidate rate of charging the pen component battery 32 to the chassis temperature candidate rate of charging the pen component battery, and select the lower of the two rates of charging as the minimum candidate rate of charging. Advantageously, by selecting the minimum candidate rate of charging, power management instructions 16 ensure that the performance benefits and objectives corresponding to the selected minimum candidate rate of charging are realized. At 214 the minimum candidate rate of charging is then utilized to charge the pen component battery 32.

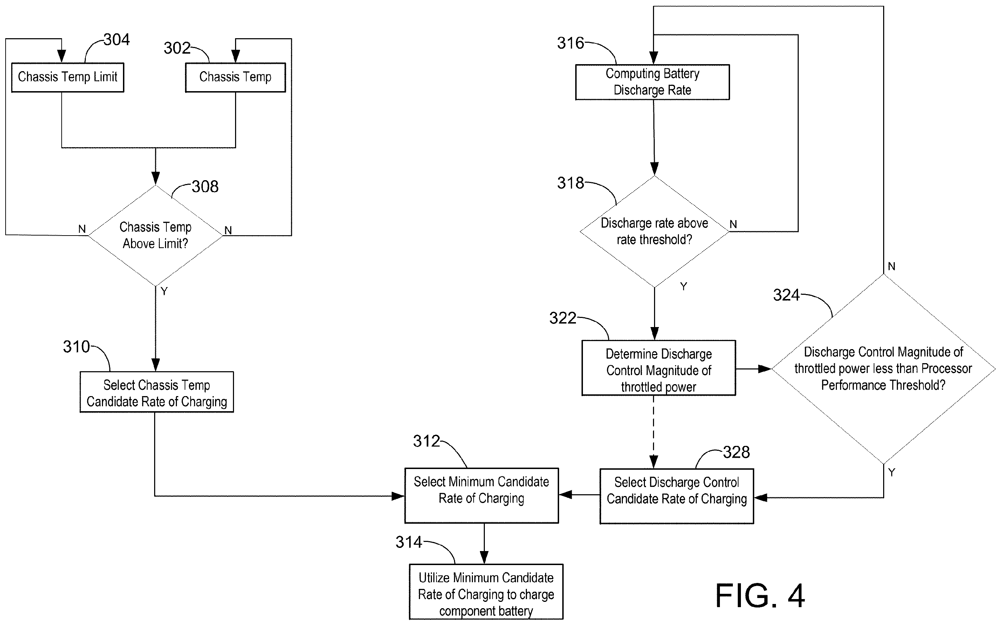

In another example and with reference now to FIG. 4, a use case example of controlling a rate of charging a component battery when mobile computing device 10 is utilizing power supplied from the computing device battery 12 is provided. Similar to the example described above, a plurality of candidate rates of charging the pen component battery are determined, and a minimum candidate rate of charging from the plurality of candidate rates of charging is selected for charging the pen component battery. For descriptive purposes only, the pen component battery 32 of electronic pen 30 will be described in this example. In other examples, instead of or in addition to electronic pen 30, auxiliary battery 12, keyboard 50 and/or other configurations of detachable components can be utilized.

As in the prior example, in this example at 302 a chassis temperature of the mobile computing device 10 is determined. Where the chassis temperature is above a chassis temperature limit, determined or retrieved at 304, it may be desirable to reduce a rate of charging the pen component battery 32 of electronic pen 30 to correspondingly reduce the heat generated by the battery charging. Accordingly, at 308 when power management instructions 16 determine that the chassis temperature is above the chassis temperature limit, at 310 the chassis temperature is utilized to determine a chassis temperature candidate rate of charging the component battery.

In some examples, a single predetermined chassis temperature candidate rate of charging the component battery is selected when the chassis temperature is above the chassis temperature limit. In other examples, a chassis temperature candidate rate of charging the component battery may be selected from a plurality of chassis temperature candidate rates of charging that correspond to different magnitudes of chassis temperatures, such as in a lookup table. As described further below, at 312 the selected chassis temperature candidate rate of charging the pen component battery 32 is compared to one or more other candidate rates of charging and a minimum candidate rate of charging is selected. At 314 the minimum candidate rate of charging is then utilized to charge the pen component battery 32.

In this example where the mobile computing device 10 is utilizing power supplied from computing device battery 12, as described further below, power management instructions 16 utilize the discharge rate of the computing device battery to determine a discharge control candidate rate of charging the pen component battery 32. At 316 power management instructions 16 determine a discharge rate of the computing device battery 12. At 318 power management instructions 16 compare the discharge rate of the computing device battery 12 to a discharge rate threshold. In different examples the discharge rate threshold can be selected to represent a discharge rate that will provide an acceptable quality of performance and/or duration of operation of the mobile computing device 10.

Where the discharge rate is less than a discharge rate threshold, the system can return to monitoring the discharge rate. Where the discharge rate meets or exceeds the discharge rate threshold, power management instructions 16 determine a discharge control magnitude of throttled power for the processor 18. More particularly and at 322, power management instructions 16 determine a discharge control magnitude of throttled power that will maintain the discharge rate of the computing device battery 12 at an acceptable rate, such as at or below the discharge rate threshold.

In some examples, determining a discharge control magnitude of throttled power can include utilizing a feedback control loop to monitor the discharge rate of the computing device battery 12 and adjusting the discharge control magnitude of throttled power to maintain the discharge rate at or below the desired or predetermined rate. In other examples, any other suitable methods for determining the discharge prevention magnitude of throttled power can be utilized.

With a discharge control magnitude of throttled power determined, in some examples at 324 power management instructions 16 can compare the discharge control magnitude of throttled power to a processor performance threshold magnitude of power. In different examples the processor performance threshold magnitude of power can be selected to represent a minimum magnitude of power that enables processor 18 to provide an acceptable quality of performance. Where the discharge control magnitude of throttled power is less than a processor performance threshold magnitude of power, the system can return to monitoring the computing battery discharge rate.

Where the discharge control magnitude of throttled power meets or exceeds the processor performance threshold magnitude of power, at 328 power management instructions 16 select a discharge control candidate rate of charging the pen component battery 32 from a plurality of candidate rates of charging to charge the pen component battery. In some examples, a discharge control candidate rate of charging the pen component battery may be selected from a plurality of candidate rates of charging that correspond to different magnitudes of discharge control throttled power, such as in a lookup table. In this manner, and in another potential advantage of the present disclosure, where the discharge control magnitude of throttled power meets or exceeds the processor performance threshold, a discharge control candidate rate of charging can be selected to charge the pen component battery while also providing an acceptable quality of performance and/or duration of operation of the mobile computing device 10. In other examples, after determining the discharge control magnitude of throttled power at 322, power management instructions 16 can proceed directly to 328 to select a discharge control candidate rate of charging the pen component battery 32.

At 312, power management instructions 16 can compare the discharge control candidate rate of charging the pen component battery 32 to the chassis temperature candidate rate of charging the pen component battery, and select the lower of the two rates of charging as the minimum candidate rate of charging. As noted above and in another potential advantage of the present disclosure, by selecting the minimum candidate rate of charging, power management instructions 16 ensure that the performance benefits and objectives corresponding to the selected minimum candidate rate of charging are realized. At 314 the minimum candidate rate of charging is then utilized to charge the pen component battery 32.

In some examples, power management instructions 16 can selectively switch from the power supply unit 20 or computing device battery 12 to a renewable energy source for charging the component battery. More particularly, and in another potential advantage of the present disclosure, in some examples power management instructions 16 can utilize the relative state of charge of the component battery to determine when to switch to a renewable energy source.

With reference again to FIG. 1, in this example computing device 10 includes two photovoltaic arrays 64 integrated into the mobile computing device 10. As described further below, power management instructions 16 can selectively switch from the power supply unit 20 or computing device battery 12 to power generated from the photovoltaic arrays 64 to charge a component battery, such as the pen component battery 32. In one example, power management instructions 16 can determine that a relative state of charge of the pen component battery 32 is above a renewable source threshold. In some examples, the renewable source threshold can be selected to correspond to a predetermined relative state of charge level that produces a speed of charging the pen component battery via the photovoltaic arrays 64 that is satisfactory to a user. In other examples, the renewable source threshold can be selected to correspond to a predetermined relative state of charge that ensures sufficient performance of the electronic pen 30. For example, for some components a renewable source threshold can be a relative state of charge of 80%.

Based at least on determining that the state of charge of the pen component battery 32 is above the renewable source threshold, power management instructions 16 can switch from the current power source (power supply unit 20 or computing device battery 12) to the photovoltaic arrays 64 to charge the pen component battery. Advantageously, by switching to a renewable energy source to charge the pen component battery 32 when the state of charge of the pen component battery is above the renewable source threshold, power provided from the power supply unit and/or computing device battery 12 can be exclusively utilized for the computing device processor 18, thereby enabling higher performance of the processor.

In other examples, mobile computing devices of the present disclosure can utilize and harvest energy from a variety of other types of renewable energy sources, including but not limited to thermoelectric and piezoelectric generators.

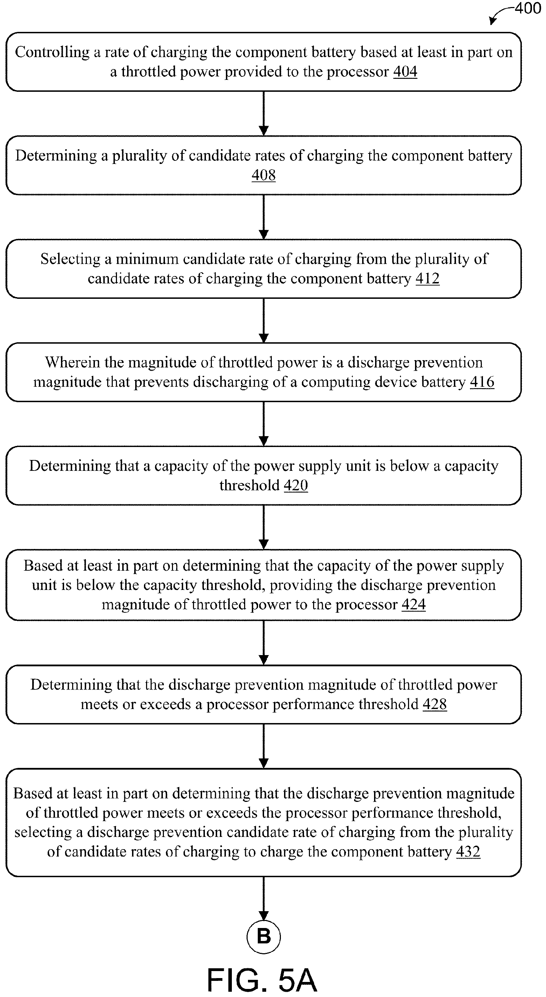

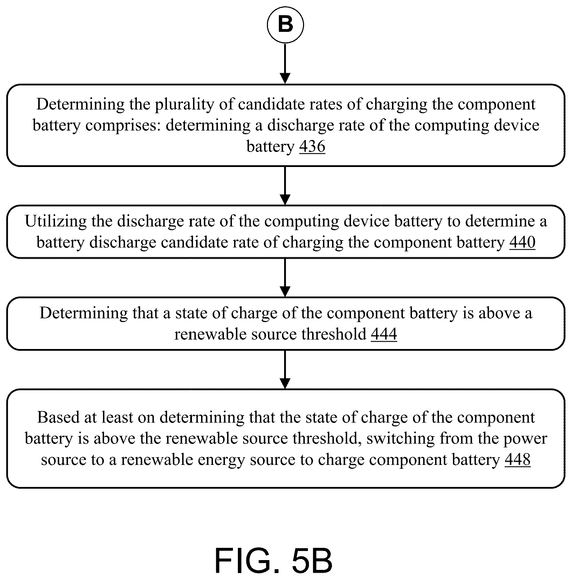

With reference now to FIGS. 5A and 5B, an example method 400 of a computing device controlling a rate of charging a component battery is provided. Method 400 may be implemented using the example configurations of computing device 10, electronic pen 30 and/or keyboard 50 as described above and other configurations as contemplated by the present disclosure. The following description of method 400 is provided with reference to the computing devices and components described herein and shown in FIGS. 1-4 and 6.

It will be appreciated that the following description of method 400 is provided by way of example and is not meant to be limiting. Therefore, it is to be understood that method 400 may include additional and/or alternative steps relative to those illustrated in FIGS. 5A and 5B. Further, it is to be understood that the steps of method 400 may be performed in any suitable order. Further still, it is to be understood that one or more steps may be omitted from method 400 without departing from the scope of this disclosure. It will also be appreciated that method 400 also may be performed in other contexts using other suitable components.

With reference now to FIG. 5A, at 404 method 400 includes controlling a rate of charging the component battery based at least in part on a magnitude of throttled power provided to the processor. At 408 method 400 includes wherein controlling the rate of charging the component battery based at least in part on the magnitude of throttled power provided to the processor comprises determining a plurality of candidate rates of charging the component battery. At 412 method 400 includes selecting a minimum candidate rate of charging from the plurality of candidate rates of charging the component battery. In one potential advantage of the present disclosure, selecting a minimum candidate rate of charging ensures that the component battery is charged while also realizing the performance benefits and objectives corresponding to the selected minimum candidate rate of charging.

At 416 method 400 includes wherein the magnitude of throttled power is a discharge prevention magnitude that prevents discharging of a computing device battery of the computing device. At 420 method 400 includes determining that a capacity of the power supply unit is below a capacity threshold. At 424 method 400 includes, based at least in part on determining that the capacity of the power supply unit is below the capacity threshold, providing the discharge prevention magnitude of throttled power to the processor.

At 428 method 400 includes determining that the discharge prevention magnitude of throttled power meets or exceeds a processor performance threshold. At 442 method 400 includes, based at least in part on determining that the discharge prevention magnitude of throttled power meets or exceeds the processor performance threshold, selecting a discharge prevention candidate rate of charging from the plurality of candidate rates of charging to charge the component battery. With reference now to FIG. 5B, at 436 method 400 includes, wherein determining the plurality of candidate rates of charging the component battery comprises determining a discharge rate of the computing device battery. At 440 method 400 includes utilizing the discharge rate of the computing device battery to determine a discharge control candidate rate of charging the component battery.

At 444 method 400 includes determining that a state of charge (RSOC) of the component battery is above a renewable source threshold. At 448 method 400 includes, based at least on determining that the state of charge of the component battery is above the renewable source threshold, switching from the power source to a renewable energy source to charge the component battery.

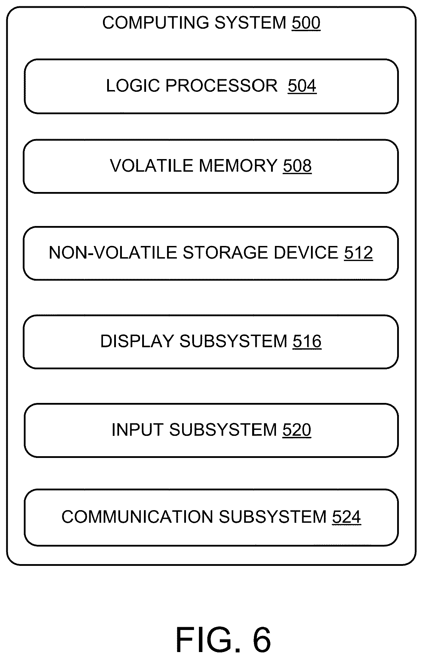

FIG. 6 schematically shows a non-limiting embodiment of a computing system 500 shown in simplified form. Computing system 500 may take the form of one or more computing devices such as personal computers, laptop computers, desktop computers, all-in-one displays, tablet computers, home-entertainment computers, gaming devices or consoles, mobile computing devices, mobile communication devices (e.g., smart phones), and/or other computing devices, styli, headphones or earbuds, head-mounted displays or eyeglasses, or other input devices. In the above examples, computing device 10, electronic pen 30, and keyboard 50 may comprise computing system 500 or one or more aspects of computing system 500.

Computing system 500 includes a logic processor 504, volatile memory 508, and a non-volatile storage device 512. Computing system 500 may optionally include a display subsystem 516, input subsystem 520, communication subsystem 524, and/or other components not shown in FIG. 6.

Logic processor 504 includes one or more physical devices configured to execute instructions. For example, the logic processor may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic processor 504 may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 504 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Volatile memory 508 may include physical devices that include random access memory. Volatile memory 508 is typically utilized by logic processor 504 to temporarily store information during processing of software instructions. It will be appreciated that volatile memory 508 typically does not continue to store instructions when power is cut to the volatile memory 508.

Non-volatile storage device 512 includes one or more physical devices configured to hold instructions executable by the logic processors to implement the methods and processes described herein. When such methods and processes are implemented, the state of non-volatile storage device 512 may be transformed-e.g., to hold different data.

Non-volatile storage device 512 may include physical devices that are removable and/or built-in. Non-volatile storage device 512 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 512 may include nonvolatile, dynamic, static, read/write, read-only, sequential-access, location-addressable, file-addressable, and/or content-addressable devices. It will be appreciated that non-volatile storage device 512 is configured to hold instructions even when power is cut to the non-volatile storage device 512.

Aspects of logic processor 504, volatile memory 508, and non-volatile storage device 512 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

When included, display subsystem 516 may be used to present a visual representation of data held by non-volatile storage device 512. As the herein described methods and processes change the data held by the non-volatile storage device, and thus transform the state of the non-volatile storage device, the state of display subsystem 516 may likewise be transformed to visually represent changes in the underlying data. Display subsystem 516 may include one or more display devices utilizing virtually any type of technology. Such display devices may be combined with logic processor 504, volatile memory 508, and/or non-volatile storage device 512 in a shared enclosure, or such display devices may be peripheral display devices.

When included, input subsystem 520 may comprise or interface with one or more user-input devices such as an electronic pen, stylus, touchpad, keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 524 may be configured to communicatively couple various computing devices described herein with each other, and with other devices. Communication subsystem 524 may include wired and/or wireless communication devices compatible with one or more different communication protocols. As non-limiting examples, the communication subsystem may be configured for communication via electrostatic voltage antennas, near-field communication (NFC) protocols, wireless telephone network, or a wired or wireless personal-, local- or wide-area network, such as Bluetooth or an HDMI over Wi-Fi connection. In some embodiments, the communication subsystem may allow computing system 500 to send and/or receive messages to and/or from other devices via a network such as the Internet.

The following paragraphs provide additional support for the claims of the subject application. One aspect provides a mobile computing device configured to charge a component battery, the mobile computing device comprising: a power supply unit; a computing device battery; a processor; and a memory storing instructions executable by the processor to: control a rate of charging the component battery from either the power supply unit or the computing device battery based at least in part on a magnitude of throttled power provided to the processor. The mobile computing device may additionally or alternatively include, wherein controlling the rate of charging the component battery based at least in part on the magnitude of throttled power provided to the processor comprises determining a plurality of candidate rates of charging the component battery. The mobile computing device may additionally or alternatively include, wherein the instructions are executable to select a minimum candidate rate of charging from the plurality of candidate rates of charging the component battery. The mobile computing device may additionally or alternatively include, wherein the magnitude of throttled power is a discharge prevention magnitude that prevents discharging of the computing device battery of the mobile computing device. The mobile computing device may additionally or alternatively include, wherein the instructions are executable to: determine that a capacity of the power supply unit is below a capacity threshold; and based at least in part on determining that the capacity of the power supply unit is below the capacity threshold, provide the discharge prevention magnitude of throttled power to the processor. The mobile computing device may additionally or alternatively include, wherein the instructions are executable to: determine that the discharge prevention magnitude of throttled power meets or exceeds a processor performance threshold; and based at least in part on determining that the discharge prevention magnitude of throttled power meets or exceeds the processor performance threshold, select a discharge prevention candidate rate of charging from the plurality of candidate rates of charging to charge the component battery. The mobile computing device may additionally or alternatively include, wherein determining the plurality of candidate rates of charging the component battery comprises: determining a chassis temperature of the mobile computing device; and utilizing the chassis temperature to determine a chassis temperature candidate rate of charging the component battery. The mobile computing device may additionally or alternatively include, wherein determining the plurality of candidate rates of charging the component battery comprises: determining a discharge rate of the computing device battery; and utilizing the discharge rate of the computing device battery to determine a discharge control candidate rate of charging the component battery. The mobile computing device may additionally or alternatively include, wherein utilizing the discharge rate of the computing device battery to determine the discharge control candidate rate of charging the component battery comprises: utilizing the discharge rate of the computing device battery to determine a discharge control magnitude of throttled power for the processor; and utilizing the discharge control magnitude of throttled power for the processor to determine the discharge control candidate rate of charging the component battery. The mobile computing device may additionally or alternatively include, wherein the instructions are executable to: determine that a state of charge of the component battery is above a renewable source threshold; and based at least on determining that the state of charge of the component battery is above the renewable source threshold, switching from the power source to a renewable energy source to charge the component battery. The mobile computing device may additionally or alternatively include, wherein the renewable energy source comprises a photovoltaic array integrated into the mobile computing device.

Another aspect provides, in a computing device, a method of controlling a rate of charging a component battery of the computing device, the computing device comprising a power supply unit, computing device battery, and a processor, the method comprising: controlling a rate of charging the component battery based at least in part on a magnitude of throttled power provided to the processor. The method may additionally or alternatively include, wherein controlling the rate of charging the component battery based at least in part on the magnitude of throttled power provided to the processor comprises determining a plurality of candidate rates of charging the component battery. The method may additionally or alternatively include selecting a minimum candidate rate of charging from the plurality of candidate rates of charging the component battery. The method may additionally or alternatively include, wherein the magnitude of throttled power is a discharge prevention magnitude that prevents discharging of a computing device battery of the computing device. The method may additionally or alternatively include determining that a capacity of the power supply unit is below a capacity threshold; and based at least in part on determining that the capacity of the power supply unit is below the capacity threshold, providing the discharge prevention magnitude of throttled power to the processor. The method may additionally or alternatively include determining that the discharge prevention magnitude of throttled power meets or exceeds a processor performance threshold; and based at least in part on determining that the discharge prevention magnitude of throttled power meets or exceeds the processor performance threshold, selecting a discharge prevention candidate rate of charging from the plurality of candidate rates of charging to charge the component battery. The method may additionally or alternatively include, wherein determining the plurality of candidate rates of charging the component battery comprises: determining a discharge rate of the computing device battery; and utilizing the discharge rate of the computing device battery to determine a discharge control candidate rate of charging the component battery. The method may additionally or alternatively include determining that a state of charge of the component battery is above a renewable source threshold; and based at least on determining that the state of charge of the component battery is above the renewable source threshold, switching from the power source to a renewable energy source to charge the component battery.

Another aspect provides a mobile computing device configured to charge a component battery, the mobile computing device comprising: a power supply unit; a computing device battery; a processor; and a memory storing instructions executable by the processor to: determine a plurality of candidate rates of charging the component battery from either the power supply unit or the computing device battery; select a selected rate of charging the component battery from the plurality of candidate rates based at least in part on a magnitude of throttled power provided to the processor; utilize the selected rate of charging the component battery to charge the component battery; determine that a state of charge of the component battery is above a renewable source threshold; and based at least on determining that the state of charge of the component battery is above the renewable source threshold, switching from the power source to a renewable energy source to charge the component battery.

Another aspect provides a mobile computing device configured to charge a component battery. The mobile computing device comprises a power supply unit, a computing device battery, a processor, and a memory storing instructions executable by the processor to control a rate of charging the component battery from either the power supply unit or the computing device battery based at least in part on a magnitude of throttled power provided to the processor.

It will be understood that the configurations and/or approaches described herein are exemplary in nature, and that these specific embodiments or examples are not to be considered in a limiting sense, because numerous variations are possible.

The subject matter of the present disclosure includes all novel and non-obvious combinations and sub-combinations of the various processes, systems and configurations, and other features, functions, acts, and/or properties disclosed herein, as well as any and all equivalents thereof.

The claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure. As used herein, the phrase "and/or" means any or all of multiple stated possibilities.

## Claims

1. A mobile computing device (10) configured to charge a component battery (14, 32, 52), the mobile computing device (10) comprising:
a power supply unit (20);
a computing device battery (12);
a processor (18, 504); and
a memory (15, 508, 512) storing instructions (16) executable by the processor (18, 504) to:
control a rate of charging the component battery (14, 32, 52) from either the power supply unit (20) or the computing device battery (12) based at least in part on a magnitude of throttled power provided to the processor (18, 504).

2. The mobile computing device of claim 1, wherein controlling the rate of charging the component battery based at least in part on the magnitude of throttled power provided to the processor comprises determining a plurality of candidate rates of charging the component battery.

3. The mobile computing device of claim 2, wherein the instructions are executable to select a minimum candidate rate of charging from the plurality of candidate rates of charging the component battery.

4. The mobile computing device of claim 2 or claim 3, wherein the magnitude of throttled power is a discharge prevention magnitude that prevents discharging of the computing device battery of the mobile computing device.

5. The mobile computing device of claim 4, wherein the instructions are executable to:
determine that a capacity of the power supply unit is below a capacity threshold; and
based at least in part on determining that the capacity of the power supply unit is below the capacity threshold, provide the discharge prevention magnitude of throttled power to the processor; and
optionally, wherein the instructions are executable to:
determine that the discharge prevention magnitude of throttled power meets or exceeds a processor performance threshold; and
based at least in part on determining that the discharge prevention magnitude of throttled power meets or exceeds the processor performance threshold, select a discharge prevention candidate rate of charging from the plurality of candidate rates of charging to charge the component battery.

6. The mobile computing device of claim 2 or claim3, wherein determining the plurality of candidate rates of charging the component battery comprises:
determining a chassis temperature of the mobile computing device; and
utilizing the chassis temperature to determine a chassis temperature candidate rate of charging the component battery.

7. The mobile computing device of claim 2 or claim 3, wherein determining the plurality of candidate rates of charging the component battery comprises:
determining a discharge rate of the computing device battery; and
utilizing the discharge rate of the computing device battery to determine a discharge control candidate rate of charging the component battery; and,
optionally, wherein utilizing the discharge rate of the computing device battery to determine the discharge control candidate rate of charging the component battery comprises:
utilizing the discharge rate of the computing device battery to determine a discharge control magnitude of throttled power for the processor; and
utilizing the discharge control magnitude of throttled power for the processor to determine the discharge control candidate rate of charging the component battery.

8. The mobile computing device of claim 1, wherein the instructions are executable to:
determine that a state of charge of the component battery is above a renewable source threshold; and
based at least on determining that the state of charge of the component battery is above the renewable source threshold, switching from either the power supply unit or the computing device battery to a renewable energy source to charge the component battery and, optionally, wherein the renewable energy source comprises a photovoltaic array integrated into the mobile computing device.

9. In a computing device (10), a method (400) of controlling a rate of charging a component battery (14, 32, 52) of the computing device (10), the computing device (10) comprising a power supply unit (20), computing device battery (12), and a processor (18, 504), the method (400) comprising:
controlling a rate of charging the component battery (14, 32, 52) based at least in part on a magnitude of throttled power provided to the processor (18, 504).

10. The method of claim 9, wherein controlling the rate of charging the component battery based at least in part on the magnitude of throttled power provided to the processor comprises determining a plurality of candidate rates of charging the component battery.

11. The method of claim 10, further comprising selecting a minimum candidate rate of charging from the plurality of candidate rates of charging the component battery.

12. The method of claim 10 or claim 11, wherein the magnitude of throttled power is a discharge prevention magnitude that prevents discharging of a computing device battery of the computing device, and
optionally, wherein the method further comprises:
determining that a capacity of the power supply unit is below a capacity threshold; and
based at least in part on determining that the capacity of the power supply unit is below the capacity threshold, providing the discharge prevention magnitude of throttled power to the processor; and
optionally, wherein the method further comprises:
determining that the discharge prevention magnitude of throttled power meets or exceeds a processor performance threshold; and
based at least in part on determining that the discharge prevention magnitude of throttled power meets or exceeds the processor performance threshold, selecting a discharge prevention candidate rate of charging from the plurality of candidate rates of charging to charge the component battery.

13. The method of claim 10 or claim 11, wherein determining the plurality of candidate rates of charging the component battery comprises:
determining a discharge rate of the computing device battery; and
utilizing the discharge rate of the computing device battery to determine a discharge control candidate rate of charging the component battery.

14. The method of claim 9, further comprising:
determining that a state of charge of the component battery is above a renewable source threshold; and
based at least on determining that the state of charge of the component battery is above the renewable source threshold, switching from either the power supply unit or the computing device battery to a renewable energy source to charge the component battery.

15. A mobile computing device (10) configured to charge a component battery (14, 32, 52), the mobile computing device (10) comprising:
a power supply unit (20);
a computing device battery (12);
a processor (18, 504); and
a memory (15, 508, 512) storing instructions (16) executable by the processor (18, 504) to:
determine a plurality of candidate rates of charging the component battery (14, 32, 52) from either the power supply unit (20) or the computing device battery (10);
select a selected rate of charging the component battery (14, 32, 52) from the plurality of candidate rates based at least in part on a magnitude of throttled power provided to the processor (18, 504);
utilize the selected rate of charging the component battery (14, 32, 52) to charge the component battery (14, 32, 52);
determine that a state of charge of the component battery (14, 32, 52) is above a renewable source threshold; and
based at least on determining that the state of charge of the component battery (14, 32, 52) is above the renewable source threshold, switching from either the power supply unit or the computing device battery to a renewable energy source to charge the component battery.
